# EUROPEAN PATENT SPECIFICATION

(11) **EP 1 397 470 B1**
(45) Date of publication and mention of the grant of the patent: **22.03.2006**
(21) Application number: 02736307.6
(22) Date of filing: 05.06.2002
(51) Int. Cl.: C10L 5/44

(54) **A METHOD FOR PRODUCTION OF THE SOLID FUEL FROM BIOMASS**
VERFAHREN ZUR HERSTELLUNG VON FESTBRENNSTOFF AUS BIOMASSE
PROCEDE DE PRODUCTION DE CARBURANT SOLIDE A PARTIR DE BIOMASSE

(30) Priority: 06.06.2001 PL 34796001
(43) Date of publication of application: 17.03.2004
(73) Proprietor: BIOTEK Sp. z o.o., 24-110 Pulawy (PL)
(72) Inventor: MANKO, Piotr, 24-100 Pulawy (PL); NOSKOWIAK, Andrzej, PL-60-566 Poznan (PL)
(74) Representative: HOFFMANN EITLE
(86) International application number: PCT/PL2002/000037
(87) International publication number: WO 2002/099015

(56) References cited:
- DE-A- 4 412 248
- DE-A- 19 610 247
- GB-A- 2 134 539
- US-A- 4 810 446

## Description

The present invention relates to the method for production of the solid fuel from biomass, in the form of briquettes.

The solid fuel of this type is used for heating houses, hothouses, for boiler-rooms and fire-places. DE 196 10 247 A1 discloses a method for producing differently shaped elements, including briquettes, from stems of sunflower which is an annual plant. The shaped elements can be used as industrial products such as insulating materials and/or building panels.

The methods for production of plant origin fuels currently known, in the form of briquettes of different density, size and shape, are produced from waste materials such as sawdust and wood chips of perennial trees. However, there is a number of drawbacks connected with these kinds of fuels and their production methods. The limited raw material base is one of them as well as its heterogenous character. This negatively affects the production process, repeatability of parameters and the final product quality. The fuel manufacturers should be positioned near sawmills or other wood processing companies which supply raw material seems. The best location for the fuel manufacturers is near their product outlets, that is large cities, suburban house settlements and hothouse farms.

This invention aims is to eliminate the above-mentioned shortcomings by introducing a high productivity raw material of homogenous character which may ensure stable production conditions.

This invention introduces the method for production of the solid fuel from biomass, in the form of briquettes in the range of density by 400-1500 g/dm³. According to the invention, biomass is prepared from stems of a perennial plant called Sida hermaphrodita Rusby chopped up into 20-100 mm long pieces, preferably 50 mm, next it is further chopped up to obtain average ratio of length to thickness between 40-80, preferably 60 and participation of pieces longer than 10 mm from 2-20%, preferably 10%, while pieces smaller than 0,25 mm should constitute 5-15%, preferably 10%.

The chopped up stems of moisture contents by 3-18%, preferably 12% are compressed into briquettes of intended thickness and shape while lignin is naturally found in the raw material, serves as a binder.

This biomass is produced from stems of Sida hermaphrodita Rusby mixed with other chopped up substances of plant origin, preferably wood which constitutes less than 60% of dry matter.

A natural binder is added, preferably molasses equal to 0,3-2,0 %, preferably 0,3% of dry matter and next it undergoes compressing.

Solid fuel made from biomass and in accordance with the invented production method has chemical composition and heating efficiency similar to birch wood and can satisfactorily substitute coal or wood.

Chemical composition of raw material used in the production allows for low emission of harmful combustion by-products, such as sulphur dioxide and nitrogen oxides. There is no danger of emission of harmful by-products of resins and synthetic adhesives combustion which occurs when briquettes or furniture are made from composite boards waste. Sida hermaphrodita Rusby plantations can be situated near briquetting plant to make transport and storage of raw material very easy.

The invention is presented by the following practical examples.

### Example I.

Once the stems of Sida hermaphrodita Rusby became technologically mature, they were cut down by a silo-harvester and turned into a mass of 50-100mm long pieces. Then the biomass was transported to a factory on a trailer. Plate mill was used to further chop up the biomass into 1-5 mm long pieces. Less than 12% constituted pieces smaller than 0,25mm. At this stage the biomass having 30% of water was ready for biquetting. This process line consisted of a drum drier, dry material container and two kinds of briquetting presses, piston and a screw type. Briquettes made by piston briquetting press contained 10% of water and were characterised by 800-1300 g/m3 density, while briquettes made by a screw briquetting press had 1300-1500 g/dm3 density. Respectively the piston briquetting press output was 180 kg/h and the screw briquetting press was 50 kg/h. The briquetting presses worked in a more stable way as compared to processing wood waste.

### Example II.

Preliminary chopped up biomass as above had some wooden sawdust added equal to 50% of dry matter. The mixture was further chopped up into 1-5 mm long pieces by a knife mill. Elements smaller than 0,25 mm constituted some 12% of the volume. At this stage the biomass had 30% of water contents. Some 0,03% of molasses was added to the biomass prepared as above and then it was compressed in a piston press. Finally briquettes of 1100 kg/m3 density were obtained which can be used for fire-places.

This kind of fuel is used for heat generation in boilers and as a substitute to coal, wood or gas as well as for house fire-places.

## Claims

1. A method for the production of the solid fuel from biomass, in the form of briquettes in the range of density of 400-1500 g/dm³ which are formed by compression, **characterized in that** the biomass is prepared from stems of a perennial plant called Sida hermaphrodita Rusby chopped up into 20-100 mm long pieces, preferably 50 mm, next it is further chopped up to obtain an average ratio of length to thickness between 40-80, preferably 60, and a participation of pieces longer than 10 mm of 2-20 %, preferably 10 %, while pieces smaller than 0,25 mm should constitute 5-15 %, preferably 10 %.

2. A method according to claim 1 **characterized in that** the further chopped up stems of moisture contents of 3-18 %, preferably 12 %, are compressed into briquettes of intended thickness and shape while lignin, which is naturally found in the raw material, serves as a binder.

3. A method according to claims 1 and 2 **characterized in that** biomass is produced from stems of Sida hermaphrodita Rusby mixed with other chopped up substances of plant origin, preferably wood which constitutes less than 60 % of dry matter.

4. A method according to claim 3 **characterized in that** the natural binder is added to the biomass, the binder preferably being molasses equal to 0,3-2,0 %, preferably 0,3 % of dry matter, before the biomass undergoes compression.

## Patentansprüche

1. Verfahren zur Herstellung eines festen Brennstoffs aus Biomasse in Form von Briketts in einem Dichtebereich von 400-1.500 g/dm³, die durch Komprimierung geformt werden, **dadurch gekennzeichnet, daß** die Biomasse aus zu 20-100 mm, vorzugsweise 50 mm langen zerkleinerten Stücken aus Stengeln einer mehrjährigen Pflanze, die Sida hermaphrodita Rusby genannt wird, hergestellt wird und als nächstes weiter zerkleinert wird, um ein durchschnittliches Verhältnis von Länge zu Dicke von 40-80, vorzugsweise 60, und einen Anteil von Stücken, die länger als 10 mm sind, von 2-20 %, vorzugsweise 10 %, zu erhalten, während Stücke, die kürzer als 0,25 mm sind, 5-15 %, vorzugsweise 10%, ausmachen sollten.

2. Verfahren gemäß Anspruch 1, **dadurch gekennzeichnet, daß** die weiter zerkleinerten Stengel mit einem Feuchtigkeitsgehalt von 3-18 %, vorzugsweise 12 %, zu Briketts der beabsichtigten Dicke und Form gepreßt werden, während Lignin, das sich natürlicherweise im Rohmaterial befindet, als Bindemittel dient.

3. Verfahren gemäß Ansprüchen 1 und 2, **dadurch gekennzeichnet, daß** die Biomasse aus Stengeln von Sida hermaphrodita Rusby hergestellt wird, die mit anderen zerkleinerten Substanzen pflanzlichen Ursprungs, vorzugsweise Holz, das weniger als 60 % der Trockenmasse bildet, vermischt wird.

4. Verfahren gemäß Anspruch 3, **dadurch gekennzeichnet, daß** das natürliche Bindemittel zur Biomasse hinzugefügt wird, wobei das Bindemittel vorzugsweise Melasse ist und 0,3-2,0 %, vorzugsweise 0,3 %, der Trockenmasse beträgt, bevor die Biomasse der Komprimierung unterzogen wird.

## Revendications

1. Procédé pour la production de carburant solide à partir de biomasse, sous la forme de briquettes dans la plage de densités de 400 à 1 500 g/dm³ qui sont formées par compression **caractérisé en ce que** la biomasse est préparée à partir de tige d'une plante pérenne appelée Sida hermaphrodita Rusby hachée en des pièces de longueur de 20 à 100 mm, de préférence de 50 mm, qui est de plus de nouveau hachée pour obtenir un rapport moyen de longueur à l'épaisseur entre 40 à 80, de préférence 60, et une participation de pièces plus longues que 10 mm de 2 à 20 %, de préférence 10 %, tandis que des pièces plus petites que 0,25 mm devraient constituer 5 à 15 %, de préférence 10 %.

2. Procédé selon la revendication 1, **caractérisé en ce que** les tiges de nouveau hachées présentant des teneurs en humidité de 3 à 18 %, de préférence 12 %, sont compressées en briquettes d'une épaisseur et forme prévues tandis que de la lignine, qui est naturellement trouvée dans le matériau brut, sert comme liant.

3. Procédé selon les revendications 1 et 2, **caractérisé en ce que** la biomasse est produite à partir de tiges de Sida hermaphrodita Rusby mélangées avec d'autres substances hachées d'origine végétale, de préférence du bois qui constitue moins que 60 % de la matière sèche.

4. Procédé selon la revendication 3, **caractérisé en ce que** le liant naturel est ajouté à la biomasse, le liant étant, de préférence de la mélasse égale à 0,3 à 2,0 %, de préférence 0,3 % de matière sèche, avant que la biomasse subisse la compression.
